# NOUVEAU FASCICULE DE BREVET EUROPEEN

(11) **EP 3 448 819 B2**
(45) Date de publication et mention de la décision concernant l'opposition: **01.10.2025**
(45) Mention de la délivrance du brevet: 04.03.2020
(21) Numéro de dépôt: 17725296.2
(22) Date de dépôt: 20.04.2017
(51) Int. Cl.: C03C 17/00, B32B 17/10, B60J 1/00, B60J 1/02, C03C 17/02, C03C 17/36

(54) **PROCEDE D'IMPRESSION D'EMAIL POUR VITRAGE FEUILLETE A COUCHES FONCTIONNELLES.**
EMAILLEDRUCKVERFAHREN FÜR VERBUNDGLASSCHEIBEN MIT FUNKTIONSSCHICHTEN
ENAMEL PRINTING METHOD FOR LAMINATED GLAZING HAVING FUNCTIONAL LAYERS

(30) Priorité: 27.04.2016 FR 1653735
(43) Date de publication de la demande: 06.03.2019
(73) Titulaire: Saint-Gobain Sekurit France, 60150 Thourotte (FR)
(72) Inventeur: DASSONVILLE, Camille, 60200 COMPIEGNE (FR); KLEYER, Dieter, 52146 WÜRSELEN (DE)
(74) Mandataire: Saint-Gobain Recherche
(86) Numéro de dépôt international: PCT/FR2017/050938
(87) Numéro de publication internationale: WO 2017/187054

(56) Documents cités:
- EP-A1- 0 106 628
- WO-A1-03/080528
- WO-A1-2005/073140
- WO-A1-2007/080186
- WO-A1-2007/080186
- WO-A1-2013/189798
- WO-A1-2014/174308
- JP-A- 2001 048 602
- JP-A- H0 731 910
- US-A- 4 954 153
- US-A- 4 959 090
- US-A- 5 108 479
- US-A- 5 431 966
- US-A- 6 103 011
- US-A1- 2003 150 848
- US-A1- 2003 232 197
- US-A1- 2010 220 019
- US-A1- 2010 310 778
- US-A1- 2015 210 872
- US-B1- 6 336 723
- US-B2- 6 598 426

## Description

La présente invention porte sur un procédé d'impression d'émail sur une feuille de verre constitutive d'un vitrage feuilleté et comprenant un empilement de couches minces fonctionnelles sensibles à la rayabilité, utilisable notamment en tant dans le domaine de l'automobile.

Les vitrages automobiles, en particulier utilisés en tant que pare-brise sont des vitrages feuilletés constitués de deux feuilles de verre associées à une feuille intercalaire en polymère thermoplastique placée entre les deux feuilles de verre. Chaque feuille de verre a ainsi une face tournée vers ladite feuille intercalaire. De façon classique, pour un vitrage monté dans un véhicule automobile, on parle des faces 1 à 4 d'un vitrage feuilleté en utilisant les conventions suivantes. La feuille de verre en contact avec l'extérieur du véhicule, encore parfois appelée première feuille de verre, possède une face 1 et une face 2. La face 1 est celle située vers l'extérieur, alors que la face 2 est celle tournée vers la feuille intercalaire. L'autre feuille de verre, ou encore deuxième feuille de verre, est en contact avec l'intérieur du véhicule et possède une face 3 et une face 4. La face 3 est celle tournée vers la feuille intercalaire alors que la face 4 est celle dirigée vers l'intérieur.

Les vitrages automobiles possèdent très souvent des bandes d'émail opaques qui ont un doble rôle : elles permettent à la fois de préserver l'intégrité de l'adhésif situé sous le vitrage lorsque ce dernier est monté par collage dans la baie de carrosserie vis à vis du rayonnement solaire et particulièrement des rayons ultraviolets et également de masquer les éléments de connexion, par exemple de type électrique, qui sont situés en bordure des faces du vitrage. Ces bandes peuvent être périphériques ou plus centrales si elles sont par exemple destinées à masquer les éléments de connectiques des rétroviseurs. Ces bandes d'émail sont déposées habituellement sur les feuilles de verre par des procédés de sérigraphie.

D'autre part, de nombreux vitrages d'automobiles sont des vitrages fonctionnalisés dans le sens où ils permettent un contrôle solaire et/ou thermique, ou encore par exemple un blindage électromagnétique. Pour obtenir ces fonctionnalités dans les vitrages, une des feuilles de verre constitutives du vitrage est revêtue d'un empilement de plusieurs couches minces dont certaines sont des couches métalliques fonctionnelles, notamment à base d'argent et d'autres des couches en matériau diélectrique possédant très résistivités très élevées de l'ordre de 10⁸ à 10¹⁶ Ω.m. Ces empilements sont très souvent fragiles dans le sens où ils sont facilement rayables et dommageables. En rayant le revêtement, les couches métalliques risquent d'être mises à nu et ainsi de constituer des points d'entrée pour des problèmes de corrosion. Les empilements doivent par conséquent être déposés sur les faces considérées comme internes et donc les moins exposées d'un vitrage feuilleté, c'est-à-dire sur la face 2 de la première feuille de verre ou la face 3 de la seconde feuille de verre. Lors des procédés de fabrication des tels verres feuilletés, lorsque les empilements sont sensibles aux rayures, la bande d'émail est déposée sur la feuille de verre qui n'est pas revêtue de l'empilement. Ainsi, si l'empilement de couches fonctionnelles est positionné sur la première feuille de verre, la bande d'émail sera appliquée sur la deuxième feuille ou inversement. Le plus souvent, l'empilement est positionné en face 3 et la bande d'émail est par conséquent en face 1 ou 2. De cette façon, la bande périphérique d'émail peut être appliquée par des techniques usuelles de sérigraphie, sans se soucier d'un quelconque revêtement puisqu'elle est déposée sur la feuille non revêtue. Dans la plupart des vitrages automobiles fonctionnalisés actuels, l'empilement de couches est donc situé en face 3 et la bande d'émail est en face 2, ce qui permet de masquer le démargement de l'empilement de couches. Or, dans cette configuration, les éléments en plastique tels que les rétroviseurs ou les supports des détecteurs de pluie sont collés sur la face 4, donc directement sur le verre, c'est-à-dire sur une surface relativement lisse ce qui peut présenter des difficultés au moment du collage. Certaines constructeurs cherchent à éviter de coller ces éléments directement sur le verre et souhaiteraient pouvoir les coller sur une bande en émail, qui ainsi faciliterait le collage tout en gardant la fonctionnalité de protection de la colle contre les UV et de masquage des éléments de connectique. Les documents WO2007080186-A1, WO2014174308-A1 et WO2013189798-A1 décrivent des vitrages feuilletés comportant au moins un empilement de couches minces fonctionnelles et au mois un bande d'émail. C'est dans ce cadre que s'inscrit la présente invention qui propose un procédé de fabrication d'un verre feuilleté dans lequel la bande d'émail est positionnée sur la feuille de verre sur laquelle l'empilement de couches fonctionnelles a été déposé. Le procédé selon l'invention permet avantageusement d'obtenir un vitrage feuilleté dans lequel l'empilement de couches fonctionnelles est positionné en face 3 et la bande d'émail est en face 4.

Le procédé selon la présente invention est un procédé de fabrication d'un verre feuilleté pour véhicule automobile comprenant au moins une première feuille de verre en contact avec l'extérieur du véhicule, une seconde feuille de verre en contact avec l'intérieur du véhicule, et un intercalaire thermoplastique positionné entre les deux feuilles de verre, au moins une desdites feuilles étant munie d'un empilement de couches minces comportant une pluralité de couches fonctionnelles sensibles aux rayures, le dit procédé comprenant les étapes suivantes :
a. dépôt de l'empilement de couches minces sur une des faces de la première ou de la deuxième feuille de verre,
b. positionnement de la face revêtue de l'empilement de couches minces en appui sur un support,
c. dépôt d'un émail liquide, dont la composition a une viscosité inférieure à 10 Pa.s, sur une zone de la face non revêtue de la feuille de verre utilisée à l'étape a), le dépôt de l'émail étant effectué par pulvérisation ou par enduction au rideau ou au rouleau, ou le dépôt de l'émail étant effectué par enduction au pinceau ou à la brosse, alimentés de façon continue par la composition d'émail,
d. chauffage des feuilles de verre pour le bombage ou formage jusqu'à des températures comprises entre 500 et 650°C,
e. mise en place de l'intercalaire thermoplastique entre les premières et secondes feuilles de verre,
f. dégazage sous vide de l'ensemble, puis
g. scellage et autoclavage de l'ensemble.

Au sens de la présente invention, la première feuille de verre est celle dont la face 1 est en contact avec l'extérieur du véhicule et la deuxième feuille de verre est en contact avec l'intérieur du véhicule (côté habitacle).

De façon préférée, l'empilement de couches minces fonctionnelles est déposé sur la face de la seconde feuille de verre qui sera, après fabrication, en contact de l'intercalaire thermoplastique. L'empilement est donc avantageusement en face 3. L'étape a) du procédé est réalisée en utilisant les techniques de dépôt usuelles pour le dépôt de couches minces fonctionnelles. On peut citer la pulvérisation cathodique magnétron couramment utilisée. De façon préférée, au moins une des couches minces de l'empilement est une couche d'argent.

L'étape b) consiste à positionner la feuille de verre revêtue de l'empilement de couches minces en appui sur un support de telle sorte que la face en contact avec le support soit la face sur laquelle le dépôt de l'empilement de couches minces fonctionnelles a été réalisé lors de l'étape a). Avantageusement, ce support est une table à ventouse qui permet de supporter la feuille de verre sans endommager l'empilement de couches minces sensibles à la rayure. Selon un autre mode de réalisation, le maintien sur le support peut être réalisé par un robot automatisé possédant des moyens de support du type ventouse.

L'étape c) du procédé correspond à l'étape de dépôt de l'émail sur la même feuille de verre que celle sur laquelle l'empilement de couches minces fonctionnelles a été déposé, mais sur la face opposée à celle revêtue de l'empilement de couches minces. Si l'empilement est avantageusement en face 3, l'étape b) consiste à déposer l'émail en face 4 de la deuxième feuille de verre. Le dépôt de l'émail est effectué par pulvérisation ou par enduction au rideau ou au rouleau, ou le dépôt de l'émail est effectué par enduction au pinceau ou à la brosse, alimentés de façon continue par la composition d'émail. La forme, la taille et le nombre de couches d'émail que l'on souhaite déposer dépendent de l'usage auquel est destiné le vitrage. De façon classique, on effectue le dépôt sur le pourtour du vitrage sous la forme d'une bande de largeur variable mais suffisante pour masquer les éléments situés sous le vitrage comme par exemple les éléments de connexion électriques et/ou de chauffage. La viscosité de la composition d'émail qui est déposée sur le vitrage doit être inférieure à 10 Pa.s pour pouvoir être appliquée par enduction au pinceau ou à la brosse. En effet, si la viscosité est trop importante, la technique de dépôt utilisée ne permet pas d'obtenir un dépôt homogène. De façon encore plus préférée, la viscosité de la composition d'émail appliquée lors de l'étape c) est comprise entre 2 et 5 Pa.s. Si la viscosité de la composition d'émail est trop faible, par exemple inférieure à 1Pa.s, le produit à appliquer est trop liquide et risque de couler pendant le transport du vitrage entre les différentes étapes du procédé.

Tout type de composition d'émail connu pour une application automobile ; le plus souvent de couleur noire, peut être utilisé dans le procédé selon la présente invention à condition que sa viscosité soit compatible avec la méthode de dépôt utilisée.

Cette étape c) de dépôt d'émail est préférentiellement réalisée par au moins un robot applicateur automatisé, muni d'au moins une tête d'alimentation du type brosse ou pinceau alimentée en continue par la composition d'émail. A la place d'une brosse, il est possible d'équiper la tête d'alimentation d'un feutre ou d'une mousse permettant également de réaliser le dépôt de l'émail. Le robot applicateur est également avantageusement muni de moyens permettant le maintien de la face revêtue en appui sur le support. Il peut ainsi s'agir du même robot automatisé que celui utilisé à l'étape b) et possédant au moins deux bras différents, l'un pour le support et l'autre pour l'application de l'émail. L'étape c) de dépôt d'émail peut être également réalisée par un ou plusieurs robots munis d'au moins deux têtes d'alimentation pour effectuer simultanément l'impression de l'émail sur la totalité du vitrage, chacune des têtes d'alimentations effectuant le dépôt sur une partie du vitrage. Cette configuration permet notamment d'utiliser des robots dont les bras sont de plus petite taille.

A l'issue de l'étape c), une des feuilles de verre possède donc sur une face un empilement de couches minces fonctionnelles et sur l'autre face une bande d'émail.

Les deux feuilles constitutives du vitrage subissent ensuite une étape de chauffage, pour leur bombage ou formage, jusqu'à une température comprise entre 500°C et 650°C. Cette température correspond au point de ramollissement de la feuille de verre qui peut alors être courbée.

Les feuilles de verre une fois bombées peuvent ainsi être directement assemblées, sans que soit nécessaire de réaliser une étape spécifique de séchage et de pré-cuisson de l'émail déposé sur la feuille de verre possédant l'empilement de couches minces fonctionnelles. Le séchage et la cuisson sont ainsi directement effectués lors de l'étape de bombage du vitrage feuilleté.

Les étapes e) à g) du procédé selon l'invention correspondent aux étapes usuelles d'assemblage d'un verre feuilleté. Les deux feuilles de verre sont positionnées de telle sorte que l'intercalaire thermoplastique soit placé entre les deux feuilles de verre. La face de la ou des feuille de verre qui comprend l'empilement de couches minces est celle tournée vers l'intercalaire thermoplastique (face 2 et/ou face 3). L'ensemble est dégazé sous vide avant d'être scellé et autoclavé. Le dégazage a par exemple lieu en plaçant l'ensemble du vitrage feuilleté dans une enveloppe en silicone, à l'intérieur de laquelle on évacue l'air par une pompe à vide. Lors de l'étape g), l'ensemble placé dans la poche sous vide est chauffé à une température d'environ 80°C, puis l'adhésion finale de l'ensemble a lieu pendant la phase d'autoclavage. Le vitrage, extrait de la poche à vide, subit par exemple un cycle de pression hydrostatique de 12 bars et de température à 135°C, pendant une durée d'environ 90 minutes pour éliminer la totalité de l'air restant.

Le vitrage feuilleté obtenu selon l'invention comprend au moins deux feuilles de verre et un intercalaire thermoplastique susceptible d'être obtenu par le procédé décrit ci-avant. Le vitrage obtenu selon l'invention comprend un empilement de couches fonctionnelles sensibles aux rayures positionné sur la face tournée vers l'intercalaire thermoplastique d'au moins une des feuilles de verres et au moins une bande d'émail sur l'autre face de la même feuille de verre. Ainsi en utilisant les terminologies définies ci-avant, le revêtement est en face 3 et l'émail en face 4. Les éléments éventuellement nécessaires à la connectique des couches minces fonctionnelles, par exemple les bandes collectrices, encore appelées barres omnibus (ou « busbar » selon la terminologie anglosaxone couramment utilisée), sont également positionnés sur la face 3 du vitrage. Le vitrage obtenu selon la présente invention est tel qu'il devient possible d'effectuer le collage d'éléments se trouvant à l'intérieur de l'habitacle du véhicule directement sur l'émail qui se trouve sur la face tournée vers l'intérieur (face 4).

L'intercalaire thermoplastique peut être par exemple un film en polyvinylbutyral, en polyuréthane, en copolymère d'éthylène acétate de vinyle, en polychlorure de vinyle, en silicone ou en résine.

L'empilement de couches minces fonctionnelles peut donner au vitrage des propriétés anti-reflets, semi-réfléchissantes, conductrices, et/ou de contôle solaire etc.

Le vitrage obtenu selon la présente invention peut également comprendre une bande d'émail sur la face de la feuille de verre qui ne comprend pas l'empilement de couches minces fonctionnelles et qui est tournée vers l'intercalaire thermoplastique. Ainsi, la face 2 du vitrage peut comprendre une bande d'émail destinée à cacher le démargement de l'empilement de couches minces. Cette bande d'émail peut être déposée par pulvérisation ou par enduction au rideau ou au rouleau.

Les figures ci-après illustrent l'invention sans en limiter la portée.

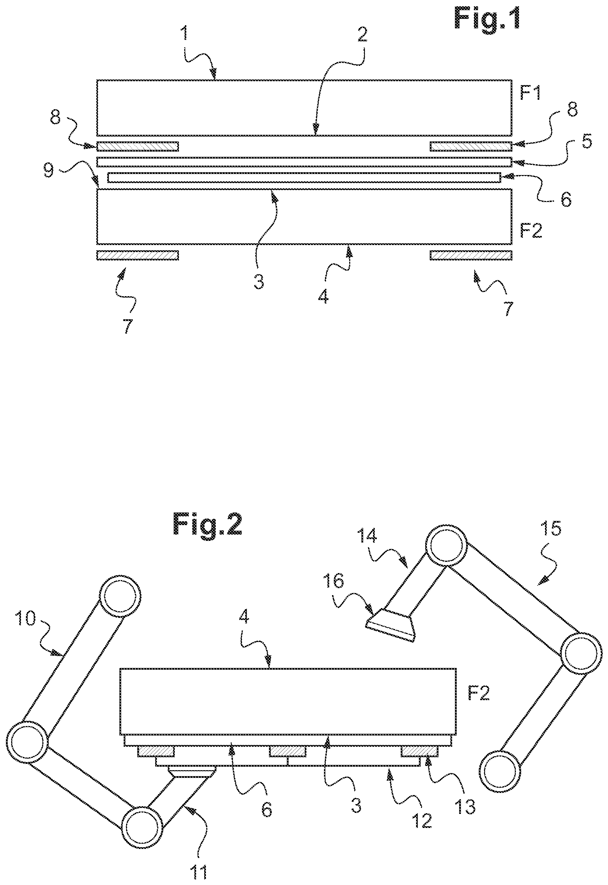

La figure 1 est une vue en coupe d'un vitrage obtenu selon la présente invention. Ce vitrage comprend deux feuilles de verre F1 et F2. La feuille F1 a une première face (1) destinée à être tournée vers l'extérieur du véhicule et une seconde face (2) tournée vers l'intercalaire thermoplastique (5). La seconde feuille F2 a une face (3) tournée vers l'intercalaire thermoplastique (5) et une face (4) destinée à être tourner vers l'intérieur de l'habitacle du véhicule. L'empilement de couches minces fonctionnelles représenté par la référence (6) est positionné sur la face (3) du vitrage. Le procédé selon l'invention permet de déposer une bande d'émail, dans le cas présent périphérique, représentée par la référence (7) sur la face (4) de la feuille F2. Sur le vitrage représenté sur la figure 1, une autre bande d'émail (8) a été déposée en périphérie de la face (2) de la feuille de verre (F1) pour cacher les zones de démargement (9) situées en bordure de l'empilement de couches minces.

La figure 2 représente un mode de réalisation du procédé selon l'invention. La feuille de verre F2 comprenant l'empilement de couches minces fonctionnelles (6) déposé sur la face (3) est maintenue en appui par un bras (11) du robot (10) permettant de supporter la feuille de verre F2 par l'intermédiaire d'un support (12) muni de ventouses (13). Un bras (14) d'un robot applicateur (15) est équipé d'une tête d'application (16) alimentée en continue par la composition d'émail à déposer sur la face (4).

## Revendications

1. Procédé de fabrication d'un verre feuilleté pour véhicule automobile comprenant au moins une première feuille de verre en contact avec l'extérieur du véhicule, une seconde feuille de verre en contact avec l'intérieur du véhicule, et un intercalaire thermoplastique positionné entre les deux feuilles de verre, au moins une desdites feuilles de verre étant munie d'un empilement de couches minces comportant une pluralité de couches fonctionnelles sensibles aux rayures, le dit procédé comprenant les étapes suivantes :
a. dépôt de l'empilement de couches minces sur une des faces de la première ou de la deuxième feuille de verre,
b. positionnement de face revêtue de l'empilement en appui sur un support,
c. dépôt d'un émail liquide, dont la composition a une viscosité inférieure à 10 Pa.s, sur une zone de la face non revêtue de la feuille de verre utilisée à l'étape a), le dépôt de l'émail étant effectué par pulvérisation ou par enduction au rideau ou au rouleau, ou le dépôt de l'émail étant effectué par enduction au pinceau ou à la brosse, alimentés de façon continue par la composition d'émail,
d. chauffage des feuilles de verre pour le bombage ou formage jusqu'à des températures comprises entre 500 et 650°C,
e. mise en place de l'intercalaire thermoplastique entre les premières et secondes feuilles de verre, de sorte que la face revêtue de l'empilement de couches minces soit tournée vers ledit intercalaire,
f. dégazage sous vide de l'ensemble, puis
g. scellage et autoclavage de l'ensemble.

2. Procédé selon la revendication 1 **caractérisé en ce que** l'étape c) est réalisée par au moins un robot applicateur automatisé muni d'au moins une tête d'alimentation du type brosse ou pinceau alimentée en continue par la composition d'émail.

3. Procédé selon la revendication 2 **caractérisé en ce que** ledit robot est également muni de moyens permettant le maintien de la face revêtue en appui sur le support.

4. Procédé selon l'une des revendications 1 à 3 **caractérisé en ce que** l'étape c) est réalisée par un ou plusieurs robots munis d'au moins deux têtes d'alimentation pour effectuer simultanément l'impression de l'émail sur la totalité du vitrage, chacune des têtes d'alimentations effectuant le dépôt sur une partie du vitrage.

5. Procédé selon l'une des revendications précédentes **caractérisé en ce que** l'émail déposé à l'étape c) est une composition liquide dont la viscosité est comprise entre 2 et 5 Pa.s

6. Procédé selon l'une des revendications précédentes **caractérisé en ce que** l'empilement de couches minces fonctionnelles déposé à l'étape a) comprend au moins une couche d'argent.

## Patentansprüche

1. Verfahren zur Herstellung von Verbundglas für ein Kraftfahrzeug, umfassend mindestens eine erste Glasscheibe, die mit der Außenseite des Fahrzeugs in Kontakt ist, eine zweite Glasscheibe, die mit der Innenseite des Fahrzeugs in Kontakt ist, und eine thermoplastische Zwischenschicht zwischen den beiden Glasscheiben, wobei mindestens eine der Glasscheiben mit einem Stapel dünner Schichten versehen ist, umfassend eine Vielzahl von kratzempfindlichen Funktionsschichten, wobei das Verfahren die folgenden Schritte umfasst:
a. Abscheiden des Stapels dünner Schichten auf eine der Seiten der ersten oder zweiten Glasscheibe,
b. Positionieren der beschichteten Seite des Stapels auf einer Unterlage,
c. Abscheiden einer flüssigen Glasur, deren Zusammensetzung eine Viskosität von weniger als 10 Pa.s aufweist, auf einen Bereich der nicht beschichteten Seite der in Schritt a) verwendeten Glasscheibe, wobei das Abscheiden der Glasur durch Sprühen oder durch Vorhang- oder Walzenbeschichtung erfolgt, oder die Abscheidung der Glasur durch Pinsel- oder Bürstenbeschichtung erfolgt, wobei die Glasurzusammensetzung kontinuierlich zugeführt wird,
d. Erhitzen der Glasscheiben zum Biegen oder Formen auf Temperaturen zwischen 500 und 650 °C,
e. Platzieren der thermoplastischen Zwischenschicht zwischen der ersten und der zweiten Glasscheibe, derart dass die mit dem Stapel dünner Schichten beschichtete Seite der Zwischenschicht zugewandt ist,
f. Vakuumentgasung der Einheit, dann
g. Versiegeln und Autoklavieren der Einheit.

2. Verfahren nach Anspruch 1, **dadurch gekennzeichnet, dass** Schritt c) von mindestens einem automatisierten Auftragsroboter ausgeführt wird, der mit mindestens einem Bürsten- oder Pinselzufuhrkopf ausgestattet ist, der kontinuierlich mit der Glasurzusammensetzung versorgt wird.

3. Verfahren nach Anspruch 2, **dadurch gekennzeichnet, dass** der Roboter außerdem mit Mitteln ausgestattet ist, um die beschichtete Seite auf der Unterlage zu halten.

4. Verfahren nach einem der Ansprüche 1 bis 3,
**dadurch gekennzeichnet, dass** Schritt c) von einem oder mehreren Robotern ausgeführt wird, die mit mindestens zwei Zuführköpfen ausgestattet sind, um gleichzeitig das Aufdrucken der Glasur auf alle Glasscheiben auszuführen, wobei jeder der Zuführköpfe die Abscheidung auf einem Teil der Glasscheiben durchführt.

5. Verfahren nach einem der vorhergehenden Ansprüche,
**dadurch gekennzeichnet, dass** die in Schritt c) abgeschiedene Glasur eine flüssige Zusammensetzung mit einer Viskosität zwischen 2 und 5 Pa.s ist.

6. Verfahren nach einem der vorstehenden Ansprüche,
**dadurch gekennzeichnet, dass** die Stapelung der in Schritt a) abgeschiedenen dünnen Funktionsschichten mindestens eine Silberschicht umfasst.

## Claims

1. A process for the manufacture of a laminated glass for a motor vehicle comprising at least a first glass sheet in contact with the exterior of the vehicle, a second glass sheet in contact with the interior of the vehicle and a thermoplastic interlayer positioned between the two glass sheets, at least one of said glass sheets being provided with a stack of thin layers comprising a plurality of functional layers sensitive to scratches, said process comprising the following stages:
a. deposition of the stack of thin layers on one of the faces of the first or of the second glass sheet,
b. positioning of the face coated with the stack resting on a support,
c. deposition of a liquid enamel, the composition of which has a viscosity of less than 10 Pa.s, on a zone of the uncoated face of the glass sheet used in stage a), the deposition of the enamel being carried out by spraying or by curtain or roller coating, or the deposition of the enamel being carried out by coating with a brush, fed continuously with the enamel composition,
d. heating the glass sheets for the bending or forming up to temperatures of between 500 and 650°C,
e. installing the thermoplastic interlayer between the first and second glass sheets, so that the face coated with the stack of thin layers is turned toward said interlayer,
f. degassing the assembly under vacuum, then
g. sealing and autoclaving the assembly.

2. The process as claimed in claim 1, **characterized in that** stage c) is carried out by at least one automated applicator robot provided with at least one feed head of the brush type fed continuously with the enamel composition.

3. The process as claimed in claim 2, **characterized in that** said robot is also provided with means making it possible to keep the coated face resting on the support.

4. The process as claimed in one of claims 1 to 3, **characterized in that** stage c) is carried out by one or more robots provided with at least two feed heads in order to carry out simultaneously the printing of the enamel over the whole of the glazing, each of the feed heads carrying out the deposition over a portion of the glazing.

5. The process as claimed in one of the preceding claims, **characterized in that** the enamel deposited in stage c) is a liquid composition, the viscosity of which is between 2 and 5 Pa.s

6. The process as claimed in one of the preceding claims, **characterized in that** the stack of thin functional layers deposited in stage a) comprises at least one silver layer.
